# EUROPÄISCHE PATENTSCHRIFT

(11) **EP 0 946 313 B1**
(45) Veröffentlichungstag und Bekanntmachung des Hinweises auf die Patenterteilung: **04.04.2001**
(21) Anmeldenummer: 97951902.2
(22) Anmeldetag: 14.11.1997
(51) Int. Cl.: B22C 1/16, B22C 1/20, C04B 35/624, C04B 35/628, C04B 35/63

(54) **ZUSAMMENSETZUNG UMFASSEND EIN GIESSEREIBINDEMITTEL UND EINEN GIESSEREISAND**
COMPOSITION COMPRISING FOUNDRY BINDER AND FOUNDRY SAND
COMPOSITION COMPRENANT UN LIANT ET UN SABLE DE FONDERIE POUR MOULES

(30) Priorität: 15.11.1996 DE 19647368
(43) Veröffentlichungstag der Anmeldung: 06.10.1999
(73) Patentinhaber: Institut Für Neue Materialien gem. GmbH, 66123 Saarbrücken (DE)
(72) Erfinder: SCHMIDT, Helmut, D-66130 Saarbrücken-Güdingen (DE); MENNIG, Martin, D-66287 Quierschied (DE); JONSCHKER, Gerhard, D-66583 Spiesen-Elversberg (DE)
(74) Vertreter: Barz, Peter, Dr.
(86) Internationale Anmeldenummer: EP9706373
(87) Internationale Veröffentlichungsnummer: WO9822241

(56) Entgegenhaltungen:
- EP-A- 0 739 666
- DE-A- 4 217 432
- DE-A- 4 417 405
- US-A- 5 250 476
- PATENT ABSTRACTS OF JAPAN vol. 095, no. 011, 26.Dezember 1995 & JP 07 204776 A (SEIBUTSU KANKYO SYST KOGAKU KENKYUSHO:KK), 8.August 1995,

## Beschreibung

Die Erfindung betrifft eine Zusammensetzung für Giessereiformen und -kerne, umfassend ein Giessereibindemittel und einen Giessereisand, wobei das Giessereibindemittel erhältlich ist durch Oberflächenmodifizierung von
a) kolloidalen anorganischen Partikeln mit
b) einem oder mehreren Silanen der allgemeinen Formel (I)

   Rₓ Si A₄₋ₓ (I)

   worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;

unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols und gegebenenfalls weitere Hydrolyse und Kondensation des Nanokomposit-Sols vor dem Inkontaktbringen mit dem Giessereisand.

Das erfindungsgemäß eingesetzte Nanokomposit-Sol wird hergestellt durch Oberflächenmodifizierung von kolloidalen anorganischen Partikeln (a) mit einem oder mehreren Silanen (b) gegebenenfalls in Gegenwart von anderen Zusatzstoffen (c) unter den Bedingungen des Sol-Gel-Prozesses.

Einzelheiten des Sol-Gel-Prozesses sind bei C.J. Brinker, G.W. Scherer: "Sol-Gel Science - The Physics and Chemistry of Sol-Gel-Processing", Academic Press, Boston, San Diego, New York, Sydney (1990) und in den DE-A-1941191, DE-A-3719339, DE-A-4020316 und DE-A-4217432 beschrieben.

Dort sind auch spezielle Beispiele für die erfindungsgemäß einsetzbaren Silane (b) sowie deren hydrolytisch abspaltbare Reste A und hydrolytisch nicht abspaltbare Reste R angegeben. Bevorzugte Beispiele für hydrolytisch abspaltbare Gruppen A sind Wasserstoff, Halogen (F, Cl, Br und I, insbesondere Cl und Br), Alkoxy (insbesondere C₂₋₄-Alkoxy, wie z.B. Ethoxy, n-Propoxy, i-Propoxy und Butoxy), Aryloxy (insbesondere C₆₋₁₀-Aryloxy, z.B. Phenoxy), Alkaryloxy (z.B. Benzyloxy), Acyloxy (insbesondere C₁₋₄-Acyloxy, wie z.B. Acetoxy und Propionyloxy) und Alkylcarbonyl (z.B. Acetyl). Ebenfalls geeignete Reste A sind Aminogruppen (z.B. Mono- oder Dialkyl-, -aryl- und -aralkylamingruppen mit den oben genannten Alkyl-, Aryl- und Aralkylresten), Amidgruppen (z.B. Benzamido) und Aldoxim- oder Ketoximgruppen. Zwei oder drei Reste A können zusammen auch eine das Si-Atom komplexierende Gruppierung bilden, wie dies z.B. bei Si-Polyolkomplexen der Fall ist, die sich von Glykol, Glycerin oder Brenzkatechin ableiten. Besonders bevorzugte Reste A sind C₂₋₄-Alkoxygruppen, insbesondere Ethoxy. Methoxygruppen sind für die Zwecke der Erfindung weniger geeignet, da sie zu hohe Reaktivität aufweisen (kurze Verarbeitungszeit des Nanokomposit-Sols).

Die genannten hydrolysierbaren Gruppen A können gegebenenfalls einen oder mehrere übliche Substituenten tragen, z.B. Halogenatome oder Alkoxygruppen.

Die hydrolytisch nicht abspaltbaren Reste R sind vorzugsweise ausgewählt aus Alkyl (insbesondere C₁₋₄-Alkyl, wie Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄Alkinyl, wie Acetylenyl und Propargyl), Aryl (insbesondere C₆₋₁₀-Aryl, wie z.B. Phenyl und Naphthyl) und den entsprechenden Alkaryl- und Arylalkylgruppen. Auch diese Gruppen können gegebenenfalls einen oder mehrere übliche Substituenten, z.B. Halogen-, Alkoxy-, Hydroxy-, Amino- oder Epoxidgruppen, aufweisen.

Die oben genannten Alkyl-, Alkenyl- und Alkinylgruppen schließen die entsprechenden cyclischen Reste, wie z.B. Cyclopropyl, Cyclopentyl und Cyclohexyl, ein.

Besonders bevorzugte Reste R sind gegebenenfalls substituierte C₁₋₄-Alkylgruppen, insbesondere Methyl und Ethyl, und gegebenenfalls substituierte C₆₋₁₀-Arylgruppen, insbesondere Phenyl.

Weiter ist es bevorzugt, daß in der obigen Formel (I) x den Wert 0, 1 oder 2, und besonders bevorzugt 0 oder 1, aufweist. Ferner weisen vorzugsweise mindestens 60 und insbesondere mindestens 70 Stoffmengen-% der Silane der Formel (I) den Wert x = 1 auf. In bestimmten Fällen kann es noch günstiger sein, wenn mehr als 80 oder sogar mehr als 90 Stoffmengen-% (z.B. 100%) der Silane der Formel (I) den Wert x = 1 aufweisen.

Die erfindungsgemäßen Giessereibindemittel können z.B. aus reinem Methyltriethoxysilan (MTEOS) oder aus Mischungen von MTEOS und Tetraethoxysilan (TEOS) als Komponente (b) hergestellt werden.

Konkrete Beispiele für Silane der allgemeinen Formel (I) sind Verbindungen der folgenden Formeln:
Si(OC₂H₅)₄, Si(O-n- oder i-C₃H₇)₄,Si(OC₄H₉)₄, SiCl₄, Si(OOCCH₃)₄, CH₃-SiCl₃, CH₃-Si(OC₂H₅)₃, C₂H₅-SiCl₃, C₂H₅-Si(OC₂H₅)₃, C₃H₇-Si(OC₂H₅)₃, C₆H₅-Si-(OC₂H₅)₃, C₆H₅-Si(OC₂H₅)₃, (C₂H₅O)₃-Si-C₃H₆-Cl,(CH₃)₂SiCl₂, (CH₃)₂Si-(OC₂H₅)₂, (CH₃)₂Si(OH)₂, (C₆H₅)₂SiCl₂, (C₆H₅)₂Si(OC₂H₅)₂, (i-C₃H₇)₃SiOH, CH₂=CH-Si (OOCCH₃)₃, CH₂=CH-SiCl₃, CH₂=CH-Si (OC₂H₅)₃, CH₂=CHSi(OC₂H₅)₃, HSiCl₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, CH₂=C(CH₃)COO-C₃H₇-Si-(OC₂H₅)₃,CH₂=C(CH₃)-COO-C₃H₇-Si(OC₂H₅)₃, n-C₆H₁₃-CH₂-CH₂-Si(OC₂H₅)₃, n-C₈H₁₇-CH₂-CH₂-Si(OC₂H₅)₃, (C₂H₅O)₃Si-(CH₂)₃-O-CH₂- 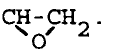 .

Diese Silane lassen sich nach bekannten Methoden herstellen; vgl. W. Noll, "Chemie und Technologie der Silicone", Verlag Chemie GmbH, Weinheim/Bergstraße (1968).

Bezogen auf die oben genannten Komponenten (a), (b) und (c) beträgt der Anteil der Komponente (b) gewöhnlich 20 bis 95, vorzugsweise 40 bis 90 und besonders bevorzugt 70 bis 90 Masse-%, ausgedrückt als Polysiloxan der Formel: RₓSiO_{(2-0,5x)}, welches bei der Kondensation entsteht.

Die erfindungsgemäß verwendeten Silane der allgemeinen Formel (I) können ganz oder teilweise in Form von Vorkondensaten eingesetzt werden, d.h. Verbindungen, die durch teilweise Hydrolyse der Silane der Formel (I), entweder allein oder im Gemisch mit anderen hydrolysierbaren Verbindungen, entstanden sind. Derartige, im Reaktionsmedium vorzugsweise lösliche Oligomere können geradkettige oder cyclische niedermolekulare Teilkondensate (Polyorganosiloxane) mit einem Kondensationsgrad von z.B. etwa 2 bis 100, insbesondere etwa 2 bis 6, sein.

Die zur Hydrolyse und Kondensation der Silane der Formel (I) eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Oft werden besonders gute Ergebnisse mit 0,35 bis 0,45 Mol Wasser pro Mol der vorhandenen hydrolysierbaren Gruppen erzielt.

Spezielle Beispiele für kolloidale anorganische Partikel (a) sind Sole und nanoskalige dispergierbare Pulver (Teilchengröße vorzugsweise bis zu 300, insbesondere bis zu 100 nm und besonders bevorzugt bis zu 50 nm) von SiO₂, TiO₂, ZrO₂, Al₂O₃, Y₂O₃, CeO₂, SnO₂, ZnO, Eisenoxiden oder Kohlenstoff (Ruß und Graphit), insbesondere von SiO₂.

Der Anteil der Komponente (a), bezogen auf die Komponenten (a), (b) und (c), beträgt gewöhnlich 5 bis 60, vorzugsweise 10 bis 40 und besonders bevorzugt 10 bis 20 Masse-%.

Zur Herstellung des Nanokomposit-Sols können als Eventualkomponenten (c) Härtungskatalysatoren wie Metallsalze und Metallalkoxide (z.B. Aluminium-, Titan-, Zirkonalkoxide), organische Bindemittel wie Polyvinylalkohol, Polyvinylacetat, Stärke, Polyethylenglykol und Gummi arabicum, oder Verbindungen glasbildender Elemente (z.B. Borsäure, Borsäureester, Natriummethylat, Kaliumacetat, Aluminium-sek-butylat) als andere Zusatzstoffe in mengen von bis zu 20 Masse-%, vorzugsweise bis zu 10 und insbesondere bis zu 5 Masse-% eingesetzt werden.

Die Hydrolyse und Kondensation wird unter Sol-Gel-Bedingungen in Gegenwart saurer Kondensationskatalysatoren (z.B. Salzsäure) bei einem pH-Wert von vorzugsweise 1 bis 2 durchgeführt, bis ein viskoses Sol entsteht.

Vorzugsweise wird neben dem Lösungsmittel, das bei der Hydrolyse der Alkoxygruppen entsteht, kein zusätzliches Lösungsmittel angewandt. Falls gewünscht, können jedoch z.B. alkoholische Lösungsmittel, wie Ethanol, oder andere polare, protische oder aprotische Lösungsmittel, wie Tetrahydrofuran, Dioxan, Dimethylformamid oder Butylglykol, eingesetzt werden.

Um eine günstige Solpartikel-Morphologie und Sol-Viskosität einzustellen, unterwirft man das erhaltene Nanokomposit-Sol vorzugsweise einem gezielten Nachreaktionsschritt, bei dem die Reaktionsmischung mehrere Stunden bis mehrere Tage auf Temperaturen von 40 bis 120°C erwärmt wird. Besonders bevorzugt ist eine eintägige Lagerung bei Raumtemperatur oder eine mehrstündige Erwärmung auf 60-80°C. Hierbei entsteht ein Nanokomposit-Sol mit einer Viskosität von vorzugsweise 5 bis 500 mPas, besonders bevorzugt 10 bis 50 mPas. Selbstverständlich kann die Viskosität des Sols auch durch Zusatz von Lösungsmitteln oder Entfernung von Reaktions-Nebenprodukten (z.B. Alkoholen) auf für den speziellen Anwendungszweck geeignete Werte eingestellt werden. Der Nachreaktionsschritt kann auch vorzugsweise mit einer Reduktion des Lösungsmittelanteils gekoppelt werden.

Die Vermischung des Nanokomposit-Sols mit dem Giessereisand erfolgt nach einer zumindest anfänglichen Hydrolyse der Komponente (b). Vorzugsweise wird das Nanokomposit-Sol vor dem Inkontaktbringen mit dem Sand durch Zufuhr einer weiteren Wassermenge aktiviert.

Zur Herstellung von Giessereiformen und -kernen wird das Nanokomposit-Sol dem Giessereiform- oder -kernsand in den für Giessereibindemittel üblichen Mengen zugemischt, beispielsweise in Mengen von 0,1 bis 20 Masse-%.

Gegebenenfalls können zusätzlich übliche Giesserei-Hilfsmittel eingesetzt werden, z.B. Erstarrungsöle, Kernöle, Trennmittel oder herkömmliche Kernsandbindemittel.

Die Härtung kann bei Raumtemperatur durchgeführt werden, erfolgt jedoch vorzugsweise durch Wärmebehandlung bei Temperaturen über 50°C, vorzugsweise über 100°C und besonders bevorzugt bei 150°C oder darüber. Die Härtung kann gegebenenfalls in einer Schutzgasatmosphäre durchgeführt werden.

Die erfindungsgemäßen Giessereibindemittel zeichnen sich dadurch aus, daß sie beim Aushärten im Vergleich zu herkömmlichen Giessereibindemitteln eine signifikant geringere Abgasmenge emittieren und daß die Form mit den herkömmlichen Standardverfahren, z.B. mittels Ultraschall, entsandet werden kann. Ferner wird beim Giessvorgang ein signifikant geringerer Gasstoß ermittelt, was für die Praxis von entscheidender Bedeutung ist, da dadurch eine höherer Oberflächengüte erzielt werden kann und auch feinere Strukturen abgegossen werden können.

Die folgenden Beispiele sollen die vorliegende Erfindung weiter erläutern.

In den folgenden Beispielen handelt es sich bei dem darin eingesetzten Kieselsol um ein wäßriges Kieselsol der Firma BAYER ("Levasil 300/30") mit einem Feststoffgehalt von 30 Masse-% und einer Teilchengröße von 7 bis 10 nm. Weiter werden in den Beispielen die folgenden Abkürzungen verwendet:
- MTEOS =: Methyltriethoxysilan
- TEOS =: Tetraethoxysilan
- PTEOS =: Phenyltriethoxysilan.
- ETEOS =: Ethyltriethoxysilan

### BEISPIEL 1

51,3 ml MTEOS (entsprechend 60 Stoffmengen-%), 19,1 ml TEOS (entsprechend 20 Stoffmengen-%) und 15,0 ml PTEOS (entsprechend 20 Stoffmengen-%) werden gemischt und die Hälfte dieser Mischung wird mit 11,7 ml Kieselsol (entsprechend 14,3 Masse% Kieselsolanteil) und 0,386 ml konzentrierter Salzsäure stark gerührt. Nach 5 Minuten wird die zweite Hälfte des Alkoxid-Gemisches zu dem Ansatz gegeben, worauf noch 5 Minuten weiter gerührt wird. Anschließend wird das entstandene Sol einem Nachreaktionsschritt (12stündiges Stehenlassen bei 60°C) unterzogen.

Vor der Anwendung werden dem Sol ca. 2,5 ml Wasser zugesetzt, um auf einen Wassergehalt von 0,5 Mol Wasser pro Mol hydrolysierbarer Gruppe zu kommen.

Das resultierende Sol wird mit einer solchen Menge Giessereisand einer Korngröße von ca. 1 mm vermischt, daß ca. 84% der Gesamtmasse aus dem Sand bestehen. Die Masse wird in einer Form festgestampft und bei 100°C 20 Minuten lang verfestigt. Man erhält einen mechanisch stabilen Formkörper, der auch bei einer 1-stündigen Temperaturbelastung bei 500°C nicht die Form verliert.

### BEISPIEL 2

Entsprechend Beispiel 1 wird ein Kernsandbindemittel hergestellt aus 184 ml MTEOS, 51,4 ml TEOS, 62,8 ml Kieselsol und 1,71 ml 37% Salzsäure. Nach 15 Minuten Nachreaktion bei Raumtemperatur ist das Bindemittel einsatzbereit. Der Feststoffgehalt beträgt 327 g/l.

Trockener Kernsand wird mit dem Bindemittel in einer Menge vermischt, daß 1,5 Masse-% festes Bindemittel enthalten sind. Die feuchte Masse wird in einem Preßstempel 30 Minuten mit 100 kN Druck gepreßt und anschließend im Preßbesteck eine Stunde bei 140°C gehärtet. Es resultiert ein anorganisch gebundener Gußkern, der beim Erhitzen auf 500°C keine giftigen Gase freisetzt und durch Ultraschalleinwirkung wieder definiert zerlegt werden kann.

### BEISPIEL 3

### 1. Herstellung des Standardbindemittels A

655 g MTEOS und 191 g TEOS werden in einen Kolben eingebracht, worauf man die Mischung unter intensivem Rühren mit 142 g wäßrigem Kieselsol versetzt und unmittelbar 9 ml H₂SO₄ (40 Masse-%) zugibt. Nach ca. 1 Minute intensivem Rühren setzt eine exotherme Reaktion ein (Erwärmung auf ca. 60°C). Vor der weiteren Verwendung wird die Dispersion zur Alterung über Nacht bei Raumtemperatur gelagert oder 1 Stunde unter Rückfluß gekocht.

### 2. Herstellung des Standardbindemittels B

621 g MTEOS und 181 g TEOS werden in einen Kolben eingebracht, worauf man die Mischung unter intensivem Rühren mit 185 g wäßrigem Kieselsol ("Levasil 50/50"; Feststoffanteil SiO₂ 50 Masse-%, von BAYER) versetzt und unmittelbar 10,3 ml H₂SO₄ (40 Masse-%) zugibt. Nach ca. 1 Minute intensivem Rühren setzt eine exotherme Reaktion ein (Erwärmung auf ca. 60°C). Vor der weiteren Verwendung wird die Dispersion zur Alterung über Nacht bei Raumtemperatur gelagert oder 1 Stunde unter Rückfluß gekocht.

### 3. Herstellung des Standardbindemittels C

463 g MTEOS, 180 g TEOS und 128 g Dimethyldiethoxysilan werden in einen Kolben eingebracht, worauf man die Mischung unter intensivem Rühren mit 267 g wäßrigem Kieselsol versetzt und unmittelbar 6,06 ml HCl (37 Masse-%) zugibt. Nach ca. 1 Minute intensivem Rühren setzt eine exotherme Reaktion ein (Erwärmung auf ca. 60°C). Die Dispersion kann direkt nach Abkühlung auf Raumtemperatur verwendet werden.

### 4. Herstellung von Giesserei-Kernsanden

10 kg Standardbindemittel A (Feststoffanteil: 34 Masse%) werden in einem Rotationsverdampfer auf einen Feststoffanteil von 60 Masse-% konzentriert. Unter intensivem Rühren werden zu 1 kg dieser konzentrierten Bindemittel-Dispersion 90 ml H₂O getropft und 10 min intensiv gerührt. 200 g der Mischung werden dann mit 10 kg Kernsand in einem Vibrationsmischer 3 min intensiv vermischt und danach in den Vorratsbehälter einer in der Gießereiindustrie üblichen Kernschießmaschine umgefüllt. Mit der Kernschießmaschine werden nach dem Hot-Box-Verfahren bei einer Schießformtemperatur von 200°C, einem Schießdruck von 6,5 bar und einer Schußzeit von 1,5 s Formkörper geschossen. Die erhaltenen Sandkerne sind nach 60 s ausreichend ausgehärtet, um aus der Schießform entfernt werden zu können. Die Kerne werden mit Grauguß sowie Messing abgegossen.

## Patentansprüche

1. Zusammensetzung für Giessereiformen und -kerne, umfassend ein Giessereibindemittel und einen Giessereisand, wobei das Giessereibindemittel erhältlich ist durch Oberflächenmodifizierung von
a) kolloidalen anorganischen Partikeln mit
b) einem oder mehreren Silanen der allgemeinen Formel (I)
Rₓ Si A₄₋ₓ (1)
worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und
x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols und gegebenenfalls weitere Hydrolyse und Kondensation des Nanokomposit-Sols vor dem Inkontaktbringen mit dem Giessereisand.

2. Zusammensetzung nach Anspruch 1, dadurch gekennzeichnet, daß die Oberflächenmodifizierung in Gegenwart eines sauren Kondensationskatalysators bei einem pH-Wert von 1 bis 2 durchgeführt worden ist.

3. Zusammensetzung nach Anspruch 1 oder 2, dadurch gekennzeichnet, daß das Nanokomposit-Sol einer Nachreaktion bei Temperaturen von Raumtemperatur bis 120°C unterzogen worden ist.

4. Zusammensetzung nach einem der Ansprüche 1 bis 3, dadurch gekennzeichnet, daß die kolloidalen anorganischen Partikel (a) ausgewählt sind aus Solen und nanoskaligen, dispergierbaren Pulvern von SiO₂, TiO₂, ZrO₂, Al₂O₃, Y₂O₃, CeO₂, SnO₂, ZnO, Eisenoxiden oder Kohlenstoff.

5. Zusammensetzung nach einem der Ansprüche 1 bis 4, dadurch gekennzeichnet, daß zur Herstellung des Nanokomposit-Sols härtungskatalysatoren, organische Bindemittel und/oder Verbindungen glasbildender Elemente als andere Zusatzstoffe (c) verwendet worden sind.

6. Zusammensetzung nach einem der Ansprüche 1 bis 5, dadurch gekennzeichnet, daß 5 bis 60, vorzugsweise 10 bis 40 und besonders bevorzugt 10 bis 20 Masse-% der Komponente (a) zur Herstellung des Nanokomposit-Sols eingesetzt worden sind.

7. Zusammensetzung nach einem der Ansprüche 1 bis 6, dadurch gekennzeichnet, daß 20 bis 95, vorzugsweise 40 bis 90 und besonders bevorzugt 70 bis 90 Masse-% der Komponente (b), ausgedrückt als Polysiloxan der Formel: RₓSiO_{(2-0,5x)}, zur Herstellung des Nanokomposit-Sols eingesetzt worden sind.

8. Zusammensetzung nach einem der Ansprüche 5 bis 7, dadurch gekennzeichnet, daß nicht mehr als 20, vorzugsweise nicht mehr als 10 und besonders bevorzugt nicht mehr als 5 Masse-% der anderen Zusatzstoffe (c) zur Herstellung des Nanokomposit-Sols eingesetzt worden sind.

9. Zusammensetzung nach einem der Ansprüche 1 bis 8, dadurch gekennzeichnet, daß die Oberflächenmodifizierung mit 0,1 bis 0,9, vorzugsweise 0,25 bis 0,75 Mol Wasser pro Mol der vorhandenen hydrolysierbaren Gruppen durchgeführt worden ist.

10. Verfahren zur Herstellung von Giessereiformen und -kernen, dadurch gekennzeichnet, daß man eine Zusammensetzung nach einem der Ansprüche 1 bis 9 verwendet.

## Claims

1. Composition for foundry molds and cores, comprising a foundry binder and a foundry sand, said foundry binder being obtainable by surface modification of
a) colloidal inorganic particles with
b) one or more silanes of the general formula (I)
Rₓ Si A₄₋ₓ (I)
where the radicals A are identical or different and are hydroxyl groups or groups which can be removed hydrolytically, except methoxy, the radicals R are identical or different and are groups which cannot be removed hydrolytically and x is 0, 1, 2 or 3, where x ≥ 1 in at least 50 mol% of the silanes;
under the conditions of the sol-gel process with a sub-stoichiometric amount of water, based on the hydrolysable groups which are present, with formation of a nanocomposite sol, and further hydrolysis and condensation of the nanocomposite sol, if desired, before it is brought into contact with the foundry sand.

2. Composition according to Claim 1, characterized in that the surface modification has been carried out in the presence of an acid condensation catalyst at a pH of from 1 to 2.

3. Composition according to Claim 1 or 2, characterized in that the nanocomposite sol has been subjected to a post-reaction at temperatures from room temperature to 120°C.

4. Composition according to any one of Claims 1 to 3, characterized in that the colloidal inorganic particles (a) are selected from the group consisting of sols and dispersible powders of nano-scaled SiO₂, TiO₂, ZrO₂, Al₂O₃, Y₂O₃, CeO₂, SnO₂, ZnO, iron oxides or carbon.

5. Composition according to any one of Claims 1 to 4, characterized in that, for preparing the nanocomposite sol, curing catalysts, organic binders and/or compounds of glass-forming elements have been used as other additives (c).

6. Composition according to any one of Claims 1 to 5, characterized in that from 5 to 60% by weight, preferably from 10 to 40% by weight, and particularly preferably from 10 to 20% by weight, of component (a) have been employed for preparing the nanocomposite sol.

7. Composition according to any one of Claims 1 to 6, characterized in that from 20 to 95% by weight, preferably from 40 to 90% by weight, and particularly preferably from 70 to 90% by weight, of component (b), expressed as polysiloxane of the formula: RₓSiO_{(2-0.5x)} have been employed for preparing the nanocomposite sol.

8. Composition according to any one of Claims 5 to 7, characterized in that not more than 20% by weight, preferably not more than 10% by weight, and particularly preferably not more than 5% by weight, of the other additives (c) have been employed for preparing the nanocomposite sol.

9. Composition according to any one of Claims 1 to 8, characterized in that the surface modification has been carried out using from 0.1 to 0.9 mol, preferably from 0.25 to 0.75 mol, of water per mole of hydrolysable groups which are present.

10. Process for producing foundry molds and cores, characterized in that a composition in accordance with any one of Claims 1 to 9 is used.

## Revendications

1. Composition pour moules et noyaux de fonderie, comprenant un sable de fonderie et un liant de fonderie que l'on peut obtenir en modifiant en surface a) des particules minérales colloïdales avec b) un ou plusieurs silanes de formule générale (I) :
RₓSiA₄₋ₓ (I)
dans laquelle les restes A sont identiques ou différents et représentent chacun un groupe hydroxyle ou un groupe éliminable par hydrolyse, à l'exception du groupe méthoxy, les restes R sont identiques ou différents et représentent chacun un groupe non éliminable par hydrolyse, et x a la valeur 0, 1, 2 ou 3, x étant supérieur ou égal à 1 pour au moins 50 % de la quantité de silane,
dans les conditions du procédé sol-gel, en utilisant une quantité d'eau inférieure à la quantité stoechiométrique basée sur les groupes hydrolysables présents, en formant ainsi un sol de nanocomposite qui est éventuellement soumis à une hydrolyse et une condensation ultérieures avant la mise en contact avec le sable de fonderie.

2. Composition selon la revendication 1, caractérisée en ce que l'on a réalisé la modification en surface en présence d'un catalyseur de condensation acide, à un pH de 1 à 2.

3. Composition selon la revendication 1 ou 2, caractérisée en ce que l'on a soumis le sol de nanocomposite à une réaction subséquente, à une température comprise dans l'intervalle allant de la température de la salle à 120 °C.

4. Composition selon l'une quelconque des revendications 1 à 3, caractérisée en ce que les particules minérales colloïdales (a) sont choisies parmi les sols et les poudres dispersables de particules de l'ordre du nanomètre, de SiO₂, de TiO₂, de ZrO₂, de Al₂O₃, de Y₂O₃, de CeO₂, de SnO₂, de ZnO, d'un oxyde de fer ou de carbone.

5. Composition selon l'une quelconque des revendications 1 à 4, caractérisée en ce que, pour la préparation du sol de nanocomposite, on a utilisé des catalyseurs de durcissement, des liants organiques et/ou des dérivés d'éléments vitrifiables en tant qu'autres additifs (c).

6. Composition selon l'une quelconque des revendications 1 à 5, caractérisée en ce que l'on a utilisé pour la préparation du sol de nanocomposite 5 à 60 % en masse, de préférence 10 à 40 % en masse et en particulier 10 à 20 % en masse de constituant (a).

7. Composition selon l'une quelconque des revendications 1 à 6, caractérisée en ce que l'on a utilisé pour la préparation du sol de nanocomposite 20 à 95 % en masse, de préférence 40 à 90 % en masse et en particulier 70 à 90 % en masse de constituant (b), exprimé en polysiloxane de formule RₓSiO_{(2-0,5x)}.

8. Composition selon l'une quelconque des revendications 5 à 7, caractérisée en ce que l'on a utilisé pour la préparation du sol de nanocomposite pas plus de 20 % en masse, de préférence pas plus de 10 % en masse et en particulier pas plus de 5 % en masse d'autres additifs (c).

9. Composition selon l'une quelconque des revendications 1 à 8, caractérisée en ce que l'on a réalisé la modification en surface en utilisant 0,1 à 0,9 mole d'eau, de préférence 0,25 à 0,75 mole d'eau par mole de groupes hydrolysables présents.

10. Procédé de préparation de moules et de noyaux de fonderie, caractérisé en ce que l'on utilise une composition selon l'une quelconque des revendications 1 à 9.
